# EUROPEAN PATENT APPLICATION

(11) **EP 4 641 874 A2**
(43) Date of publication of application: **29.10.2025**
(21) Application number: 23920162.7
(22) Date of filing: 21.12.2023
(51) Int. Cl.: H02J 7/00, H02J 7/02, H02J 7/34, H01M 10/44

(54) **ELECTRONIC DEVICE FOR OBTAINING POWER ON BASIS OF POWER RANGE OF EXTERNAL ELECTRONIC DEVICE, AND METHOD THEREFOR**

(30) Priority: 30.01.2023 KR 20230011832; 31.01.2023 KR 20230013280
(71) Applicant: Samsung Electronics Co., Ltd., Suwon-si, Gyeonggi-do 16677 (KR)
(72) Inventor: KIM, Kyoungwon, Suwon-si, Gyeonggi-do 16677 (KR); LEE, Woong, Suwon-si, Gyeonggi-do 16677 (KR)
(74) Representative: Nederlandsch Octrooibureau
(86) International application number: PCT/KR2023/021338
(87) International publication number: WO 2024/162613

(57) **Abstract**

An electronic device according to one embodiment may comprise a port, a battery, a charge circuit, a charge controller and a processor. The processor can be configured to: use the charge controller so as to communicate, on the basis of a first data signal received through the port, with an external electronic device connected to the port, thereby obtaining a power signal from the external electronic device; receive a second data signal from the external electronic device while the battery is charged by means of the charge circuit having received the power signal; and control the charge circuit on the basis of first power indicated by means of the first data signal and/or second power indicated by means of the second data signal and on the basis of power-limit-related parameters, which are included in the second data signal and indicate the external electronic device state.

## Description

### [Technical Field]

The present disclosure relates to an electronic device for obtaining power based on a power range of an external electronic device and a method thereof.

### [Background Art]

An electronic device may include a rechargeable battery. The electronic device may operate by electrical energy stored in the battery. Using the electrical energy stored in the battery, the electronic device may operate while being separated from a power supplying system. The electronic device may charge the battery using power received from an external electronic device.

### [Disclosure]

### [Technical Solution]

An electronic device according to an embodiment may comprise a port, a battery, charging circuitry, a charging controller, and a processor. The processor may be configured to identify, by using the charging controller, a first data signal received through the port. The processor may be configured to obtain, by communicating with the external electronic device connected to the port based on the first data signal, a power signal from the external electronic device. The processor may be configured to receive, in a state that the battery is charged by the charging circuitry receiving the power signal, a second data signal from the external electronic device. The processor may be configured to control, based on a parameter which indicates a state of the external electronic device associated with a power limit and is included in the second data signal, the charging circuitry based on at least one of a first power indicated by the first data signal or a second power indicated by the second data signal.

A method of an electronic device according to an embodiment, may comprise identifying, by using a charging controller of the electronic device, a first data signal received through a port of the electronic device. The method may comprise obtaining, by communicating with an external electronic device connected to the port based on the first data signal, a power signal from the external electronic device. The method may comprise receiving, in a state that a battery of the electronic device is charged by charging circuitry of the electronic device receiving the power signal, a second data signal from the external electronic device. The method may comprise controlling, based on a parameter which indicates a state of the external electronic device associated with a power limit and is included in the second data signal, the charging circuitry based on at least one of a first power indicated by the first data signal or a second power indicated by the second data signal.

An electronic device according to an embodiment may comprise a port, a battery, charging circuitry, a charging controller, and a processor. The processor may be configured to identify a first data signal received through the port using the charging controller. The processor may be configured to obtain, based on the first data signal, a power signal from an external electronic device by communicating with the external electronic device connected to the port. The processor may be configured to receive, in a state that the battery is charged by the charging circuitry receiving the power signal, a second data signal from the external electronic device. The processor may be configured to control, in response to identifying a first preset state of the external electronic device associated with a power limit based on the second data signal, the charging circuitry using one of a first power indicated by the first data signal or a second power indicated by the second data signal. The processor may be configured to control the charging circuitry using the first power of the first power or the second power in response to identifying a second preset state of the external electronic device associated with the power limit based on the second data signal.

A method of an electronic device according to an embodiment may comprise identifying a first data signal received through a port of the electronic device using a charging controller of the electronic device. The method may comprise obtaining, based on the first data signal, a power signal from an external electronic device by communicating with the external electronic device connected to the port. The method may comprise receiving, in a state that a battery of the electronic device is charged by charging circuitry the electronic device receiving the power signal, a second data signal from the external electronic device. The method may comprise controlling, in response to identifying a first preset state of the external electronic device associated with a power limit based on the second data signal, the charging circuitry using one of a first power indicated by the first data signal or a second power indicated by the second data signal. The method may comprise controlling the charging circuitry using the first power of the first power or the second power in response to identifying a second preset state of the external electronic device associated with the power limit based on the second data signal.

### [Description of the Drawings]

FIG. 1 illustrates an example of an electronic device and an external electronic device according to an embodiment.
FIG. 2 illustrates an example of a block diagram of an electronic device according to an embodiment.
FIG. 3 illustrates an example of a signal flowchart of an electronic device and an external electronic device according to an embodiment.
FIG. 4 illustrates an example of a flowchart of an electronic device according to an embodiment.
FIG. 5 illustrates an example of a flowchart of an electronic device according to an embodiment.
FIG. 6 illustrates an example of a user interface (UI) displayed by an electronic device according to an embodiment.
FIG. 7 illustrates an example of a graph of a current of a power signal received by an electronic device, according to an embodiment.
FIG. 8 is a block diagram of an electronic device in a network environment according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

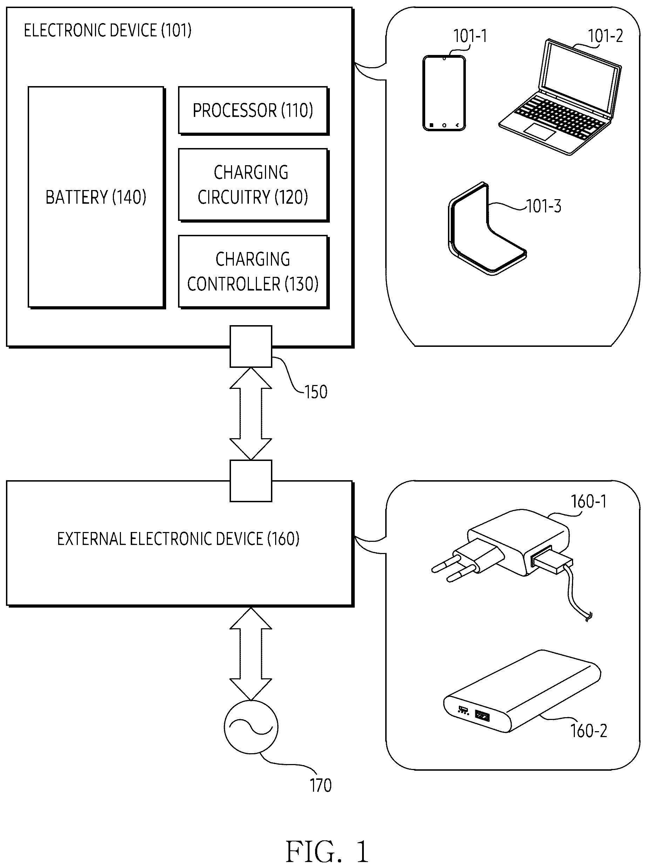

FIG. 1 illustrates an example of an electronic device 101 and an external electronic device 160 according to an embodiment. In an embodiment, the electronic device 101 may be a terminal. Referring to FIG. 1, as an example of the terminal, a user terminal 101-1 in a form of a mobile phone (or a smartphone) is exemplarily illustrated. A form factor of the mobile phone (or the smartphone) is not limited to the user terminal 101-1 of FIG. 1, and for example, the electronic device 101 may include a user terminal 101-3 including a deformable flexible display. Referring to FIG. 1, the electronic device 101 may include a personal computer (PC) such as a laptop 101-2. An embodiment is not limited thereto, and the electronic device 101 may include a smart pad, a tablet PC, a smartwatch and smart accessories such as a head-mounted device (HMD).

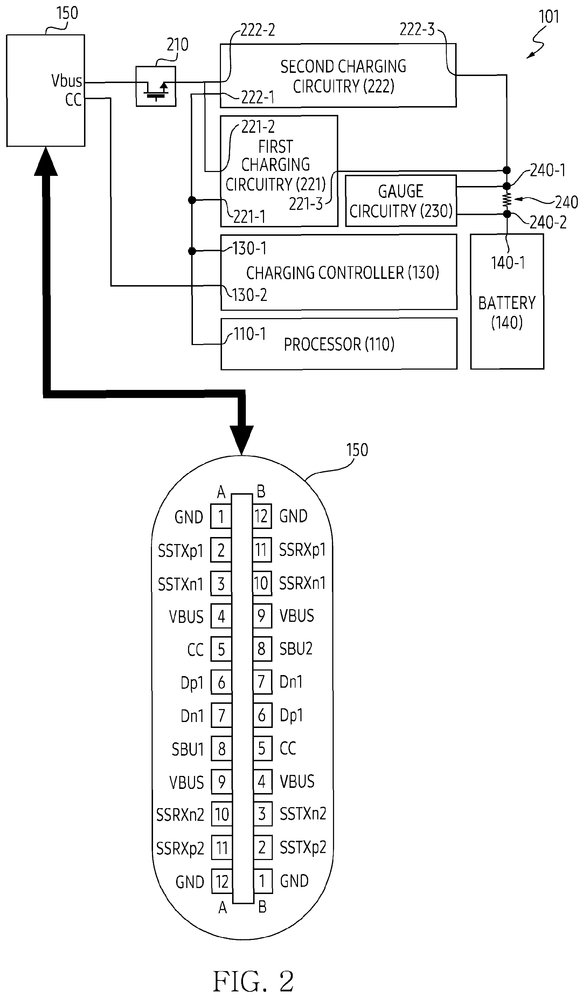

Referring to FIG. 1, the electronic device 101 according to an embodiment may include at least one of a processor 110, charging circuitry 120, a charging controller 130, or a battery 140. The electronic device 101 may obtain power for driving hardware (e.g., the processor 110) included in the electronic device 101 from the battery 140. The hardware (or circuitry) included in the electronic device 101 to charge the battery 140 may be divided into the charging circuitry 120 and/or the charging controller 130. The electronic device 101 may obtain power for charging the battery 140 through an antenna (not illustrated) including a port 150 and/or a coil. An example of a structure of the charging circuitry 120, the charging controller 130, and the processor 110, disposed in the electronic device 101 to obtain power from an external electronic device 160 connected by wire through the port 150 is described with reference to FIG. 2.

Referring to FIG. 1, the electronic device 101 according to an embodiment may be connected with the external electronic device 160 through the port 150. The port 150 may include a hardware component (e.g., a connector) for supporting wired communication based on a universal serial bus (USB). In present disclosure, the electronic device 101 may be referred to as a first electronic device. The electronic device 101 may be referred to as a master electronic device in terms of a subject that allocates a unique address (or a device identifier) of the external electronic device 160 based on the USB. The external electronic device 160 may be referred to as a second electronic device. The external electronic device 160 may be referred to as a slave electronic device in terms of a subject that receives a unique address from the master electronic device of the USB.

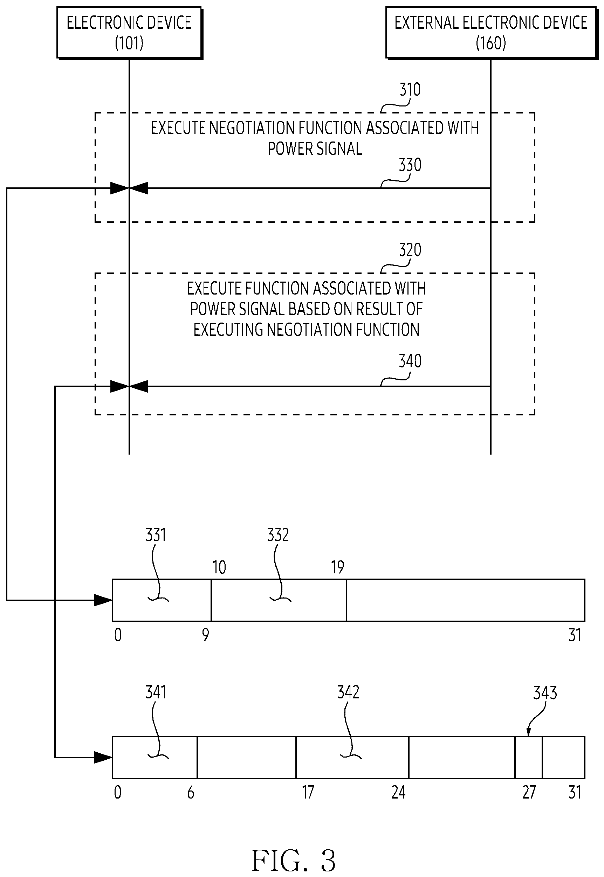

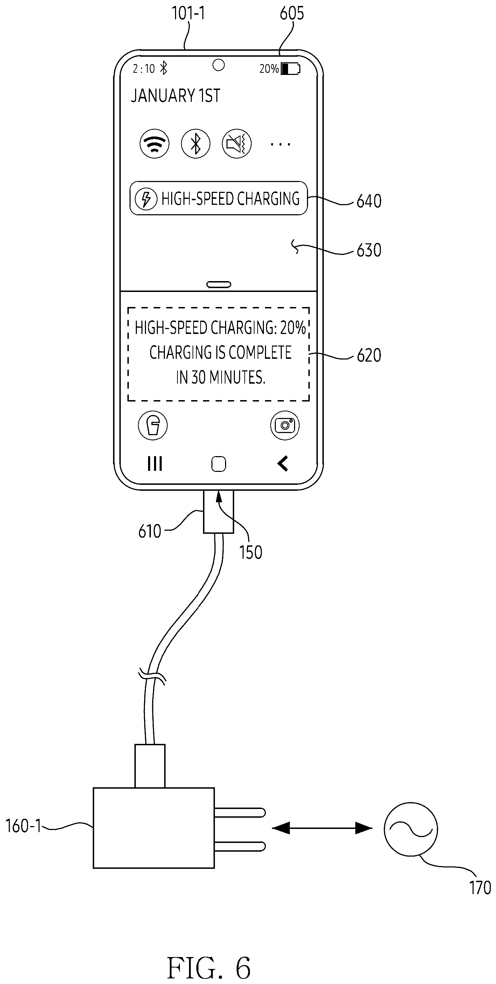

The electronic device 101 according to an embodiment may transmit or receive a power signal based on a USB power delivery (PD) (e.g., a USB PD 3.0 standard) protocol in a state of being connected with the external electronic device 160 through the port 150. In terms of a subject that outputs and/or provides the power signal based on the USB PD, the external electronic device 160 may be referred to as a host, a source, and/or a provider. In terms of a subject that receives and/or consumes the power signal based on the USB PD, the electronic device 101 may be referred to as a client, a sink, and/or a consumer. The embodiment is not limited thereto, and the electronic device 101 may operate as the host of the USB PD. In an embodiment supporting the USB PD protocol, the port 150 included in the electronic device 101 may include a USB type C port (e.g., a USB type C receptacle and/or a USB type C plug). In response to being connected with a cable (e.g., a USB type C cable) extended from the external electronic device 160 through the port 150, communication based on the USB PD protocol may be initiated between the electronic device 101 and the external electronic device 160. Operations of the electronic device 101 and the external electronic device 160 that communicate with each other based on the USB PD protocol will be described with reference to FIGS. 3 to 5. An example of a user interface (UI) displayed by the electronic device 101 that has obtained power from the external electronic device 160 based on the USB PD protocol will be described with reference to FIG. 6.

Referring to FIG. 1, the external electronic device 160 electrically connected with the electronic device 101 through the port 150 may include an adapter 160-1 and/or an auxiliary battery (or a portable power bank) 160-2. The adapter 160-1 may include a Type-A (TA) adapter. The external electronic device 160 may receive an alternating current (AC) power signal of a distribution system 170 provided from a power plant and output a direct current (DC) power signal from the alternating current power signal. The external electronic device 160 may generate a power signal having a voltage and/or a current requested by the electronic device 101 and transmit the generated power signal to the electronic device 101. For example, the external electronic device 160 may include a programmable power supply (PPS) that supports adjusting the voltage and/or the current based on the USB PD.

The electronic device 101 according to an embodiment may communicate with the external electronic device 160 to regulate the voltage and/or the current of the power signal provided from the external electronic device 160 for charging the battery 140. The electronic device 101 may execute a function of regulating the voltage and/or the current in order to reduce time during which the battery 140 is charged. The external electronic device 160 that outputs the power signal having a voltage and/or a current in a finite range may output a power signal with powers different according to the voltage and/or the current. Based on providing maximum power based on the voltage and/or the current requested by the electronic device 101, the external electronic device 160 may notify the electronic device 101 that a state of the external electronic device 160 operates at a power limit.

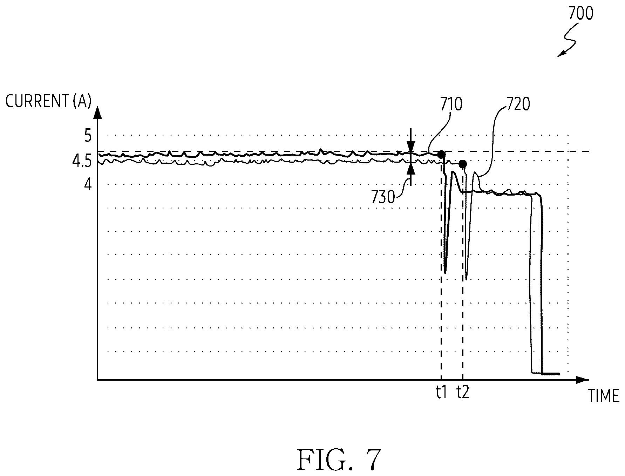

For example, the electronic device 101 may request a power signal having a target current to the external electronic device 160 to charge the battery 140 based on a constant current (CC) charging method. In the example, in a case that a maximum current that may be provided together with the voltage of the power signal is less than the target current, the external electronic device 160 may reach the power limit at a moment of outputting the power signal having the maximum current. The electronic device 101 according to an embodiment may calculate a range of power supported by the external electronic device 160 using information provided from the external electronic device 160, based on identifying the external electronic device 160 reaching the power limit. Based on a result of calculating the range, the electronic device 101 may change the voltage and/or the current requested to the external electronic device 160. Based on a change in the voltage and/or the current of the power signal by the request, the electronic device 101 may obtain greater power from the external electronic device 160. Since the electronic device 101 obtains the greater power from the external electronic device 160, the electronic device 101 may complete charging of the battery 140 in a shorter time. An example of the electronic device 101 for completing the charging of the battery 140 relatively early based on the example will be described with reference to FIG. 7.

As described above, the electronic device 101 according to an embodiment may obtain the power signal for fast charging from the external electronic device 160 based on the USB PD. For example, the electronic device 101 may maximize the power provided by the external electronic device 160 while charging the battery 140 based on the CC charging method. In order to maximize the power, the electronic device 101 may calculate a range of power that may be outputted by the external electronic device 160 from a signal (e.g., a PD message) received from the external electronic device 160 based on the USB PD. Based on the range, the electronic device 101 may obtain greater power from the external electronic device 160 that has reached the power limit. Based on the power, the electronic device 101 may increase a speed at which the battery 140 is charged.

Hereinafter, an exemplary connection of hardware (e.g., the processor 110, the charging circuitry 120, the charging controller 130, and/or the battery 140) included in the electronic device 101 to support the USB PD will be described with reference to FIG. 2.

FIG. 2 illustrates an example of a block diagram of an electronic device 101 according to an embodiment. The electronic device 101 of FIG. 1 may include the electronic device 101 of FIG. 2. Referring to FIG. 2, the electronic device 101 may include at least one of a processor 110, an overvoltage protection (OVP) integrated circuit (IC) 210, first charging circuitry 221, second charging circuitry 222, a charging controller 130, a battery 140, or gauge circuitry 230.

The processor 110 of the electronic device 101 according to an embodiment may include a hardware component for processing data based on one or more instructions. The hardware component for processing the data may include, for example, an arithmetic and logic unit (ALU), a floating point unit (FPU), a field programmable gate array (FPGA), a central processing unit (CPU), and/or an application processor (AP). The number of processors 110 may be one or more. For example, the processor 110 may have a structure of a multi-core processor such as a dual core, a quad core, or a hexa core.

The battery 140 of the electronic device 101 according to an embodiment may output, from chemical energy, electrical energy to be consumed in other circuitry and/or hardware components in the electronic device 101. For example, the battery 140 of the electronic device 101 may include a battery cell, a battery module, or a battery pack. The battery 140 may include a storage battery or a secondary battery that stores power by charging. For example, the battery 140 may be any one of a lithium ion (Li-ion) battery, a lithium ion polymer (Li-ion polymer) battery, a lead-acid storage battery, a nickel-cadmium (NiCd) battery, and a nickel hydrogen (NiMH) storage battery. The battery 140 may be charged by power applied to an end 140-1. The end 140-1 of the battery 140 may correspond to a positive electrode (e.g., a cathode) of the battery 140. For example, at the end 140-1, when magnitude of a current inputted to the battery 140 is greater than magnitude of a current outputted from the battery 140, the battery 140 may be charged. When the magnitude of the current outputted from the battery 140 is greater than the magnitude of the current inputted to the battery 140, the battery 140 may be discharged. The electronic device 101 may measure a state-of-charge (SOC) and/or an open-circuit voltage (OCV) of the battery 140 by using a resistor 240 connected to the end 140-1 of the battery 140 and the gauge circuitry 230 connected to both ends 240-1 and 240-2 of the resistor 240. In an embodiment, the gauge circuitry 230 may be referred to as a fuel gauge.

Referring to FIG. 2, the OVP IC 210, the charging controller 130, the first charging circuitry 221, the second charging circuitry 222, and the resistor 240 may be disposed in the electronic device 101 to control the charging of the battery 140. The first charging circuitry 221 may include a direct charger integrated circuit (DCIC). The second charging circuitry 222 may include a power management integrated circuit (PMIC) or an interface PMIC (IF PMIC). The first charging circuitry 221 may be used to charge the battery 140 based on a fixed current (e.g., a direct current), such as a CC charging method. Although not illustrated, the first charging circuitry 221 may provide relatively large power to the battery 140 by using one or more capacitors (e.g., flying capacitors). The second charging circuitry 222 may be used to charge the battery 140 based on a fixed voltage, such as a constant voltage (CV) charging method. An embodiment is not limited thereto, and the second charging circuitry 222 may include circuitry for charging the battery 140 based on a variable voltage and/or a variable current.

As described above with reference to FIG. 1, a port 150 of the electronic device 101 may include a USB type C connector (e.g., a USB type C port). The port 150 may be used as a downstream facing port (DFP) or an upstream facing port (UFP) according to a role (e.g., source or sink) of the electronic device 101 based on a USB PD. The embodiment is not limited thereto, and the port 150 may be used as a dual role data port (DRD) supporting both a function of the DFP and a function of the UFP.

Referring to FIG. 2, a plurality of pins (terminals) formed in the port 150 based on the USB type C connector are illustrated. The port 150 may have a structure based on a USB type C receptacle. Based on the structure of the USB type C receptacle, a surface A and a surface B may be formed in the port 150, and 12 pins may be disposed on each of the surface A and the surface B. Referring to FIG. 2, the 12 pins disposed on the surface A may include GND (A1), SSTXp1 (A2), SSTXn1 (A3), VBUS (A4), CC (A5), Dp1 (A6), Dn1 (A7), SBU1 (A8), VBUS (A9), SSRXn2 (A10), SSRXp2 (A11), and GND (A12). Referring to FIG. 2, the 12 pins disposed on the surface B may include GND (B1), SSTXp2 (B2), SSTXn2 (B3), VBUS (B4), CC (B5), Dp1 (B6), Dn1 (B7), SBU2 (B8), VBUS (B9), SSRXn1 (B10), SSRXp1 (B11), and GND (B12). The above-described names of pins may correspond to names included in a standard associated with the USB type C receptacle.

Referring to FIG. 2, the pins included in port 150 may be used to receive different electrical signals set by the USB PD. For example, using the configuration channel (CC) (A5 and B5) pins, the electronic device 101 may perform exchanging of information based on the USB PD. The information may include a power data object (PDO), which is information transmitted to or received from an external electronic device (e.g., the external electronic device 160 of FIG. 1), which is a PPS. For example, the electronic device 101 may receive the power signal using the Vbus (A4, A9, B4, and B9) pins. The embodiment is not limited thereto, and the electronic device 101 may output the power signal provided from the battery 140 through the Vbus (A4, A9, B4, and B9) pins.

Referring to FIG. 2, each of the pins included in the port 150 may be connected to circuitry dedicated to process the electrical signals corresponding to the pins. For example, the CC (A5 and B5) pins of the port 150 may be connected to an end 130-2 of the charging controller 130. For example, the Vbus (A4, A9, B4, and B9) pins of the port 150 may be connected to at least one charging circuitry through the OVP IC 210. Referring to FIG. 2, the first charging circuitry 221 may be connected to the Vbus (A4, A9, B4, and B9) pins of the port 150 through an end 221-2 connected to the OVP IC 210. The second charging circuitry 222 may be connected to the Vbus (A4, A9, B4, and B9) pins of the port 150 through an end 222-2 connected to the OVP IC 210.

The electronic device 101 according to an embodiment may communicate with the external electronic device according to a USB protocol (e.g., a USB 2.0, a USB 3.1, and/or another version of the USB protocol) based on the charging controller 130 connected to the CC (A5 and B5) pins. In an embodiment, the charging controller 130 may be referred to as a power delivery integrated circuit (PDIC) and/or a configuration channel power delivery (CCPD) IC. The embodiment is not limited thereto, and the electronic device 101 may further include a mux integrated circuit (MUIC) for data communication based on the Dp1 (A6 and B6) pins and the Dn1 (A7 and B7) pins.

In an embodiment, the charging controller 130 may be used to relay PPS communication between different hardware (e.g., the processor 110, the first charging circuitry 221, and/or the second charging circuitry 222) of the electronic device 101 and the external electronic device. The PPS communication may be performed for adaptive regulation of power provided from the external electronic device, which is the PPS. The PPS communication may be performed by the USB PD. The embodiment is not limited thereto. Referring to FIG. 2, the charging controller 130 may be connected with at least one of the processor 110, the first charging circuitry 221, and the second charging circuitry 222 through an end 130-1. An interface (e.g., an inter-integrated circuit (I2C)) for transmitting and/or receiving digital information may be formed between the end 130-1 of the charging controller 130, an end 110-1 of the processor 110, an end 221-1 of the first charging circuitry 221, and an end 222-1 of the second charging circuitry 222. Hereinafter, an operation of hardware included in the electronic device 101 will be described in a state that the external electronic device (e.g., the external electronic device 160 of FIG. 1) for providing power is connected through the port 150.

Referring to FIG. 2, in a state that a wired connection between the electronic device 101 and the external electronic device is established at the port 150, the charging controller 130 may identify the wired connection based on the CC (A5 and B5) pins connected through the end 130-2. The charging controller 130 may communicate with the external electronic device based on a bi-phase mark code (BMC) (or a two-phase mark code) encoding method. For example, the charging controller 130 may identify a data signal received through the port 150 based on the BMC encoding method. The identification of the data signal by the charging controller 130 may include an operation of obtaining a binary code (e.g., a digital code encoded by the BMC encoding method) included in the data signal. The charging controller 130 may transmit the binary code included in the data signal received from the external electronic device to the processor 110 through the end 130-1.

The processor 110 according to an embodiment may identify information included in the binary code by performing parsing on the binary code received from the charging controller 130 through the end 110-1. The information may include parameters associated with the external electronic device generating the binary code and/or a power signal transmitted from the external electronic device to the electronic device 101. Based on the parameters, the processor 110 may calculate power obtainable from the external electronic device. The processor 110 may transmit a result of calculating the power to the first charging circuitry 221 and/or the second charging circuitry 222 through the end 110-1.

The first charging circuitry 221 according to an embodiment may charge the battery 140 based on the power received from the processor 110 through the end 221-1. For example, the first charging circuitry 221 may request the charging controller 130 to transmit a signal for requesting a power signal having a voltage and/or a current based on the power through the end 221-1. Based on the power signal received from the external electronic device through the end 221-2, the first charging circuitry 221 may apply the voltage and/or the current to an end 221-3 connected with the battery 140.

The processor 110 of the electronic device 101 according to an embodiment may adaptively calculate power obtainable from the external electronic device based on the data signal identified by the charging controller 130. For example, the processor 110 may calculate power to be provided to the first charging circuitry 221 from information (e.g., a fixed PDO (FPDO) and/or an augmented PDO (APDO)) included in different data signals provided from the external electronic device 160.

Hereinafter, an operation in which the processor 110 of the electronic device 101 according to an embodiment calculates the power of the external electronic device based on the FPDO and/or the APDO will be described with reference to FIG. 3.

FIG. 3 illustrates an example of a signal flowchart of an electronic device 101 and an external electronic device 160 according to an embodiment. The electronic device 101 and the external electronic device 160 of FIG. 1 may include the electronic device 101 and the external electronic device 160 of FIG. 3. For example, an operation of the electronic device 101 described with reference to FIG. 3 may be performed by the processor 110 and/or the charging controller 130 of FIG. 1.

Referring to FIG. 3, in operation 310, the electronic device 101 and the external electronic device 160 may execute a negotiation function associated with a power signal. In operation 310, the electronic device 101 may identify the external electronic device 160 connected to a port (e.g., the port 150 of FIGS. 1 to 2) using a charging controller (e.g., the charging controller 130 of FIGS. 1 to 2). In operation 310, the electronic device 101 and the external electronic device 160 may exchange profile information associated with the power. The profile information may include information on a power demand and/or supply of a device (e.g., the electronic device 101 and/or the external electronic device 160) that has generated the profile information. Based on the profile information, one of the electronic device 101 and the external electronic device 160 may be set as a source of a USB PD and the other as a sink of the USB PD.

Referring to FIG. 3, in a state that the negotiation function is executed based on operation 310, the electronic device 101 may obtain a first data signal 330 from the external electronic device 160 based on the charging controller (e.g., the charging controller 130 of FIGS. 1 to 2). The first data signal 330 may include the profile information of the external electronic device 160. The processor 110 may obtain capability information of the external electronic device 160 from the first data signal 330. In an embodiment, the capability information, which is a binary code format based on a fixed power data object (FPDO), may be included in the first data signal 330. The first data signal 330 may be referred to as a source capability message. The FPDO may include parameters indicating a fixed voltage (e.g., 5 V, 9 V, 15 V, 20 V, or a combination thereof) and/or a fixed current (e.g., 500 mA, 1.5 A, 2 A, 3 A, or a combination thereof) associated with an on the go (OTG), supported by the external electronic device 160.

Referring to FIG. 3, a 32-bit binary code included in the first data signal 330 is illustrated. Bits included in the binary code may have a position number of 0 to 31. The position number may be used to indicate positions of the bits in the binary code. Referring to FIG. 3, 10 bits 331 having a position number of 0 to 9 may indicate a maximum value of the fixed current supported by the external electronic device 160. Referring to FIG. 3, 10 bits 332 having a position number of 10 to 19 may indicate a voltage corresponding to the current represented by the bits 331. For example, the external electronic device 160 that has transmitted a second data signal 340 may transmit a power signal having a current corresponding to the bits 331 of the second data signal 340 and a voltage represented by the bits 332 of the second data signal 340. In an embodiment, the bits of the first data signal 330 including the bits 331 and 332 may indicate parameters included in Table 1.

**[Table 1]**

| Position number | Parameter |
|---|---|
| 31~30 | Fixed supply |
| 29 | Dual-roll power flag |
| 28 | USB suspended support flag |
| 27 | Unconstrained power flag |
| 26 | USB communication capability flag |
| 25 | Dual-role data flag |
| 24 | Unchunked extended messages support flag |
| 24 | Extended power range (EPR) mode capability flag |
| 22 | Reserved |
| 21~20 | Peak current |
| 19~10 | Voltage in units of 50 mV |
| 9~0 | Maximum current in units of 10 mA |

Referring to Table 1, the electronic device 101 may determine a value obtained by multiplying the number corresponding to the bits 331 of the first data signal 330 by 10 mA as a maximum current of the external electronic device 160 identified by the first data signal 33. The electronic device 101 may determine a value obtained by multiplying the number corresponding to the bits 332 of the first data signal 330 by 50 mV as a maximum value of the voltage of the power signal in a state that the external electronic device 160 provides the power signal having the maximum current. Based on the bits 331 and 332 of the first data signal 330, the electronic device 101 may obtain a first power indicated by the first data signal 330. For example, based on the multiplication of a voltage and a current, the electronic device 101 may obtain the first power by multiplying the maximum current by the maximum value of the voltage.

Referring to FIG. 3, in operation 320, the electronic device 101 and the external electronic device 160 may execute a function associated with a power signal based on a result of executing the negotiation function of operation 310. For example, the electronic device 101 may obtain a power signal from the external electronic device 160 by communicating with the external electronic device 160 based on the first data signal 330. For example, in operation 320, the electronic device 101 may charge a battery (e.g., the battery 140 of FIGS. 1 to 2) of the electronic device 101 based on the power signal obtained from the external electronic device 160.

The electronic device 101 according to an embodiment may receive the second data signal 340 from the external electronic device 160 in a state that the battery of the electronic device 101 is charged by charging circuitry (e.g., the charging circuitry 120 of FIG. 1 and/or the first charging circuitry 221 of FIG. 2) that has received a power signal. The state may include a state in which operation 320 is performed. The state may include a state in which charging based on the USB PD is performed. The second data signal 340 may be referred to as a source capability message. The second data signal 340 may include the capability information of the external electronic device 160 based on an APDO. For example, the second data signal 340 may be transmitted to the electronic device 101 by the external electronic device 160 that supports a power signal of a voltage and/or a current different from the fixed voltage and/or the fixed current of the first data signal 330. Although the second data signal 340 is illustrated to be transmitted in operation 320, an embodiment is not limited thereto. For example, the second data signal 340 may be transmitted from the external electronic device 160 to the electronic device 101 while executing the negotiation function of operation 310. Transmitting the second data signal 340 to the electronic device 101 by the external electronic device 160 may be performed to notify a state of the external electronic device 160 at a specific moment, to notify a state of the external electronic device 160 based on a power limit, or may be repeatedly (or periodically) performed.

Referring to FIG. 3, a 32-bit binary code included in the second data signal 340 is illustrated. Bits included in the binary code may have a position number of 0 to 31. The electronic device 101 according to an embodiment may identify a maximum current provided by the external electronic device 160 from 7 bits 341 having a position number of 0 to 6 within the binary code of the second data signal 340. The electronic device 101 may identify a maximum voltage provided by the external electronic device 160 from 8 bits 342 having a position number of 17 to 24 within the binary code of the second data signal 340. The electronic device 101 may identify a state of the external electronic device associated with a power limit from a bit 343 having a position number of 27 within the binary code included in the second data signal 340. For example, the bit 343 may be referred to as a parameter (or a flag) indicating the state. In an embodiment, bits of the second data signal 340 including the bits 341, 342, and 343 may indicate parameters included in Table 2.

**[Table 2]**

| Position number | Parameter |
|---|---|
| 31~30 | APDO flag |
| 29~28 | Standard power range (SPR) PPS supply flag |
| 27 | PPS power limit flag |
| 26~25 | Reserved |
| 24~17 | Maximum voltage in units of 100 mV |
| 16 | Reserved |
| 15~8 | Maximum voltage in units of 100 mV |
| 7 | Reserved |
| 6~0 | Maximum current in units of 50 mA |

Referring to Table 2, the electronic device 101 may determine a value obtained by multiplying the number corresponding to the bits 341 of the second data signal 340 by 50 mA as the maximum current of the external electronic device 160 identified by the second data signal 340. The electronic device 101 may determine a value obtained by multiplying the number corresponding to the bits 342 of the second data signal 340 by 100 mV as the maximum voltage of the external electronic device 160 identified by the second data signal 340. Based on the multiplication of the maximum voltage and the maximum current, the external electronic device 160 may obtain a second power indicated by the second data signal 340.

The electronic device 101 according to an embodiment may identify, from the second data signal 340, whether the voltage supported by the external electronic device 160 is greater than or equal to a preset voltage (e.g., 9 V). For example, the electronic device 101 may compare the maximum voltage indicated by the bits 342 with the preset voltage. In a case that the maximum voltage is lower than the preset voltage, the electronic device 101 may charge the battery by using the second charging circuitry 222 of FIG. 2. In a case that the maximum voltage is greater than or equal to the preset voltage, the electronic device 101 may charge the battery by using the first charging circuitry 221 of FIG. 2. At a moment that the maximum voltage greater than the preset voltage is identified, a processor (e.g., the processor 110 of FIGS. 1 to 2) of the electronic device 101 may control the first charging circuitry 221 of FIG. 2 based on the second power corresponding to the second data signal 340. As the first charging circuitry 221 is controlled based on the second power, the electronic device 101 may obtain a power signal that is close to or has the second power from the external electronic device 160. The first charging circuitry 221 controlled based on the second power may control the charging controller (e.g., the charging controller 130 of FIG. 2) to request a power signal having the second power from the external electronic device. The request of the power signal having the second power may be performed based on transmission of a data signal including a request data object (RDO), which is information set for requesting the power signal in the USB PD.

In an embodiment, while charging the battery based on the first charging circuitry 221 of FIG. 2, the electronic device 101 may receive the second data signal 340. The electronic device 101 may identify a parameter for indicating the power limit of the external electronic device 160, which is a PPS, at a preset position of the binary code included in the second data signal 340. For example, based on the bit 343 of the second data signal 340, the electronic device 101 may identify the state of the external electronic device 160 associated with the power limit. In a case of identifying a first preset state indicating that the external electronic device 160 has reached the power limit, the electronic device 101 may control the first charging circuitry 221 by using any one (e.g., a relatively smaller power) of the first power corresponding to the first data signal 330 or the second power corresponding to the second data signal 340. In a case of identifying a second preset state (e.g., a state in which the power limit is not reached) of the external electronic device 160 that is distinguished from the first preset state, the electronic device 101 may control the first charging circuitry 221 by using the first power among the first power or the second power. For example, based on the reception of the second data signal 340, the processor of the electronic device 101 may adaptively control the first charging circuitry 221.

Referring to FIG. 3, the power signal being transmitted between the electronic device 101 and the external electronic device 160 based on operation 320 may be at least temporarily ceased by a data signal (not illustrated) of the electronic device 101 and/or the external electronic device 160. For example, the electronic device 101 may transmit the data signal including information (e.g., RDO) in which a voltage and/or a current is written as 0 to the external electronic device 160. Based on the data signal, the external electronic device 160 may cease transmitting the power signal to the electronic device 101. For example, the electronic device 101 may transmit a data signal including an end of communication (EOC) message to the external electronic device 160. Based on the data signal, the external electronic device 160 may cease transmitting the power signal to the electronic device 101.

As described above, the electronic device 101 according to an embodiment may more accurately measure power that is obtainable from the external electronic device 160 by using data signals (e.g., the first data signal 330 and/or the second data signal 340) transmitted from the external electronic device 160. Based on the measured power, the electronic device 101 may enable the external electronic device 160 to provide the measured power, by controlling the charging circuitry (e.g., the first charging circuitry 221 of FIG. 2) and/or the charging controller (e.g., the charging controller 130 of FIGS. 1 to 2) of the electronic device 101. The electronic device 101 may charge the battery (e.g., the battery 140 of FIGS. 1 to 2) by using the measured power. Since the battery is charged by the measured power, the electronic device 101 may terminate the charging of the battery in a shorter time.

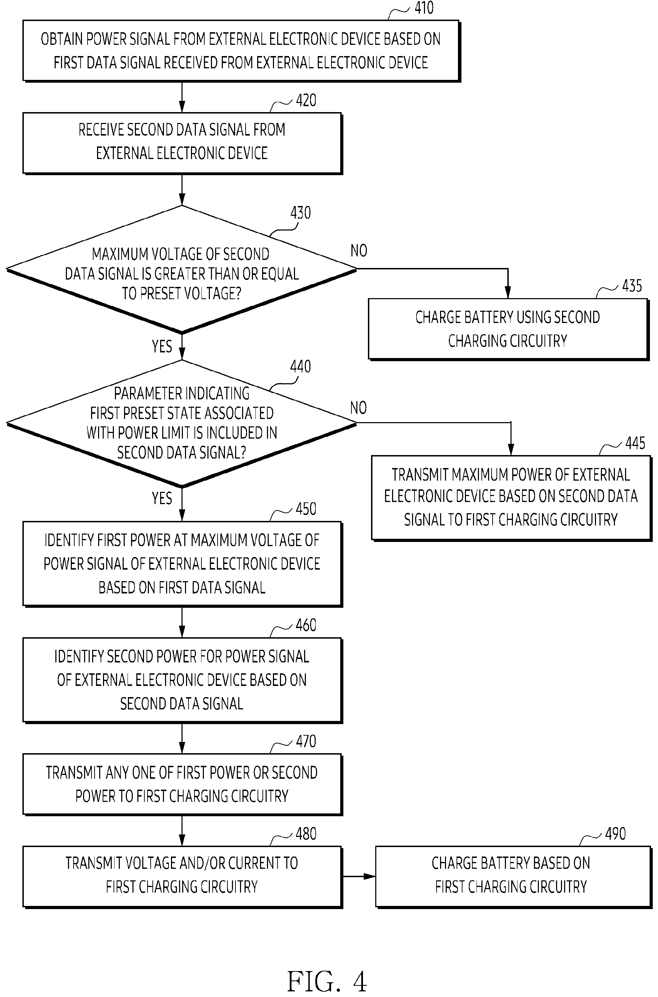

Hereinafter, an operation of the electronic device 101 according to an embodiment described above with reference to FIGS. 1 to 3 will be described with reference to FIG. 4.

FIG. 4 illustrates an example of a flowchart of an electronic device according to an embodiment. The electronic device 101 of FIG. 1 may include the electronic device 101 of FIG. 4. An operation of the electronic device 101 described with reference to FIG. 4 may be performed by the processor 110, the charging circuitry 120, and/or the charging controller 130 of FIG. 1. At least one of operations of FIG. 4 may be associated with the operations of FIG. 3 (e.g., operation 320 of FIG. 3).

Referring to FIG. 4, in operation 410, the electronic device according to an embodiment may obtain power from an external electronic device (e.g., the external electronic device 160 of FIGS. 1 to 3) based on a first data signal received from the external electronic device. The first data signal in operation 410 may include the first data signal 330 of FIG. 3. The electronic device may perform operation 410 after executing the negotiation function of operation 310 of FIG. 3. Using the power of operation 410, the electronic device may charge a battery (e.g., the battery 140 of FIG. 1) of the electronic device.

Referring to FIG. 4, in operation 420, the electronic device according to an embodiment may receive a second data signal from the external electronic device. The second data signal in operation 420 may include the second data signal 340 of FIG. 3. Receiving the second data signal based on operation 420 by the electronic device may be performed while obtaining a power signal from the external electronic device based on operation 410.

Referring to FIG. 4, in operation 430, the electronic device according to an embodiment may identify whether a maximum voltage of the second data signal is greater than or equal to a preset voltage. The electronic device may identify the maximum voltage supported by the external electronic device from a binary code in the second data signal based on an APDO. The preset voltage may be 9 V. An embodiment is not limited thereto. In a case that the maximum voltage is lower than the preset voltage (430-NO), the electronic device may perform operation 435. In a case that the maximum voltage is greater than or equal to the preset voltage (430-YES), the electronic device may perform operation 440.

Referring to FIG. 4, in operation 435, the electronic device according to an embodiment may charge the battery using second charging circuitry. The second charging circuitry of operation 435 may include circuitry for charging the battery based on a switching method and/or a CV charging method, as illustrated in the second charging circuitry 222 of FIG. 2.

Referring to FIG. 4, in operation 440, the electronic device according to an embodiment may identify whether a parameter indicating a first preset state associated with a power limit is included in the second data signal. The parameter of operation 440 may correspond to the bit 343 of FIG. 3. The first preset state may be identified by the parameter having a preset value (e.g., a binary code 1) indicating that the external electronic device has reached the power limit. In a case that the parameter indicating the first preset state is included in the second data signal (440-YES), the electronic device may perform operation 450. In a state in which a parameter (e.g., a parameter having a binary code 0) indicating a second preset state different from the first preset state is identified from the second data signal (440-NO), the electronic device may perform operation 445.

Referring to FIG. 4, in operation 445, the electronic device according to an embodiment may transmit and/or notify a maximum power of the external electronic device based on the second data signal to the first charging circuitry. The first charging circuitry of operation 445 may include circuitry for charging the battery based on a direct current and/or a CC charging method, as illustrated in the first charging circuitry 221 of FIG. 2. The electronic device may identify the maximum power supported by the external electronic device by using the second data signal based on the APDO of operation 420. The electronic device may enable the first charging circuitry to charge the battery using the power signal having the maximum power of the external electronic device by controlling the first charging circuitry based on the maximum power. For example, in a case that the external electronic device does not reach the power limit, the electronic device may increase the power provided from the external electronic device by using the first charging circuitry.

Referring to FIG. 4, in operation 450, the electronic device according to an embodiment may identify a first power at the maximum voltage of the power signal of the external electronic device based on the first data signal. The electronic device may identify, from the first data signal, a maximum current of the external electronic device based on an FPDO and a voltage of a power signal at the maximum current. The electronic device may identify the first power of operation 450 based on a multiplication of the maximum current and the voltage. The first power may indicate the maximum power that may be provided by the external electronic device at the fixed voltage and/or the fixed current.

Referring to FIG. 4, in operation 460, the electronic device according to an embodiment may identify a second power for the power signal of the external electronic device based on the second data signal. The electronic device may identify, from the second data signal, the maximum voltage and the maximum current of the external electronic device based on the APDO. Based on a multiplication of the maximum voltage and the maximum current identified from the second data signal, the electronic device may identify the second power. The second power may indicate a maximum power in a voltage range and a current range provided by the external electronic device which is a PPS.

Referring to FIG. 4, in operation 470, the electronic device according to an embodiment may transmit any one of the first power or the second power to the first charging circuitry. For example, the electronic device may transmit or notify power, which is a relatively smaller one, from among the first power or the second power, to the first charging circuitry.

Referring to FIG. 4, in operation 480, the electronic device according to an embodiment may transmit a voltage and/or a current to the first charging circuitry. The electronic device may identify a charging current and/or a voltage (e.g., a floor voltage) of the battery, based on an SOC of the battery. The electronic device may transmit the charging current and/or the voltage identified by the first charging circuitry. The charging current and/or the voltage transmitted by the electronic device to the first charging circuitry may be less than or equal to a maximum value of the current and/or the voltage supported by the first charging circuitry.

Referring to FIG. 4, in operation 490, the electronic device according to an embodiment may charge the battery based on the first charging circuitry. The first charging circuitry may determine a voltage range and/or a current range for charging the battery based on the power received by operation 460 and the voltage and the current received by operation 470. The first charging circuitry may control the charging controller based on the voltage range and/or the current range to request a power signal in the voltage range and/or the current range to the external electronic device. The first charging circuitry may perform a constant current (CC) charging on the battery by using the requested power signal.

In operation 490 of FIG. 4, in a case that a power signal greater than the voltage range and/or the current range is received, the first charging circuitry of the electronic device may operate in a power limit mode. In a case that the power signal within the voltage range and the current range is received, the first charging circuitry of the electronic device may operate in a normal mode. In the power limit mode, the first charging circuitry may regulate a magnitude of the current inputted to the battery within a guaranteed current range of the battery. In an embodiment, in the power limit mode, the electronic device may transmit an SOC-based voltage and/or current to the first charging circuitry by performing operation 480 again.

Referring to FIG. 4, based on the state of the external electronic device indicated by the parameter of operation 440, the electronic device may control the first charging circuitry by using at least one of the first power indicated by the first data signal or the second power indicated by the second data signal. The electronic device may maximize power supplied to the battery by the first charging circuitry for charging based on a direct current according to the first data signal and/or the second data signal.

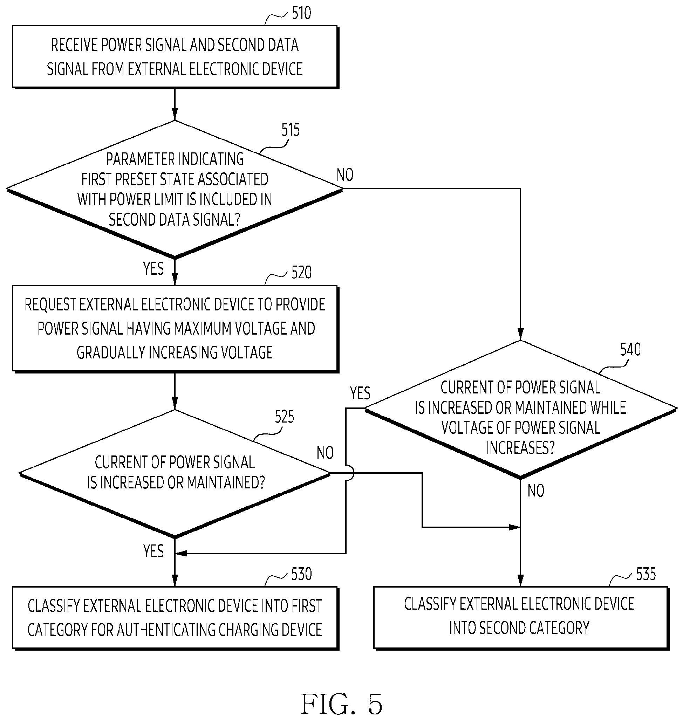

The electronic device according to an embodiment may authenticate the external electronic device that has transmitted the second data signal by using power measured from the APDO included in the second data signal. Hereinafter, an example of an operation of the electronic device for authenticating the external electronic device will be described with reference to FIG. 5.

FIG. 5 illustrates an example of a flowchart of an electronic device according to an embodiment. The electronic device 101 of FIG. 1 may include the electronic device of FIG. 5. An operation of the electronic device 101 described with reference to FIG. 5 may be performed by the processor 110, the charging circuitry 120, and/or the charging controller 130 of FIG. 1. At least one of operations of FIG. 5 may be associated with at least one of the operations of FIGS. 3 to 4.

Referring to FIG. 5, in operation 510, the electronic device according to an embodiment may receive a power signal and a second data signal from an external electronic device (e.g., the external electronic device 160 of FIGS. 1 to 3). The electronic device may perform operation 510 after executing the negotiation function of operation 310 of FIG. 3. The second data signal in operation 510 may include the second data signal 340 of FIG. 3.

Referring to FIG. 5, in operation 515, the electronic device according to an embodiment may identify whether a parameter indicating a first preset state associated with a power limit is included in the second data signal. The electronic device may perform operation 515 of FIG. 5, similarly to operation 440 of FIG. 4. For example, the electronic device may extract a binary code based on an APDO from the second data signal and obtain a parameter (e.g., the bits 343 of FIG. 3) of a preset position from the binary code. In a case that the parameter has a preset value (e.g., a binary code 1) indicating the first preset state, the electronic device may determine that the parameter indicating the first preset state is included. In a case that the parameter has another value (e.g., a binary code 0) different from the preset value, the electronic device may determine that a parameter indicating another state different from the first preset state is included. In a state that the parameter indicating the first preset state is identified from the second data signal (515-YES), the electronic device may perform operation 520. In a state that the parameter indicating the second preset state is identified from the second data signal (515-NO), the electronic device may perform operation 540.

Referring to FIG. 5, in operation 520, the electronic device according to an embodiment may request the external electronic device to provide a power signal having a maximum voltage and a gradually increasing voltage. In a case of identifying that the external electronic device operates in the first preset state in which the power limit is reached, the electronic device may perform operation 520. The electronic device according to an embodiment may identify a maximum voltage of operation 520 based on a maximum current (e.g., the maximum current encoded in the bits 341 of FIG. 3) and the maximum voltage (e.g., the maximum voltage encoded in the bits 342 of FIG. 3) included in the second data signal. The electronic device may obtain the power signal having the maximum voltage by communicating with the external electronic device based on the maximum voltage. In a case that the power signal has the maximum voltage and has a current lower than the maximum current, the electronic device may request the external electronic device to increase the voltage and/or the current of the power signal. For example, the electronic device may request the external electronic device to increase the voltage based on a preset offset voltage (e.g., an offset voltage greater than 20 mV). Requesting an increase in voltage to the external electronic device by the electronic device may be repeatedly performed based on a preset number of times.

Referring to FIG. 5, in operation 525, the electronic device according to an embodiment may determine whether the current of the power signal provided from the external electronic device is increased or maintained by the request of operation 520. Since the electronic device calculated the maximum voltage and the maximum current of the external electronic device based on the second data signal provided from the external electronic device, in a case that the external electronic device operates normally, the external electronic device may transmit a power signal having a current that is increased or maintained (i.e., not decreased) in response to the request. In a case that the current in operation 525 is increased or maintained (525-YES), the electronic device may perform operation 530. In a case that the current in operation 525 is decreased (525-NO), the electronic device may perform operation 535. By selectively performing at least one of operations 530 and 535, the electronic device may classify the external electronic device as an authenticated charging device, or as an unauthenticated charging device. The electronic device that has performed the request based on the preset offset voltage of operation 520 may restore a voltage (e.g., a voltage of a power signal prior to operation 520) requested to the external electronic device based on performing at least one of operations 530 and 535.

Referring to FIG. 5, in operation 540, the electronic device according to an embodiment may determine whether the current of the power signal decreases while the voltage of the power signal increases. In a case of identifying that the external electronic device operates in the second preset state of not reaching the power limit, the electronic device may perform operation 540. The electronic device according to an embodiment may request an increase in the voltage of the power signal to the external electronic device based on operations 445 and 490 of FIG. 4. In a case that the voltage of the power signal received from the external electronic device increases and the current of the power signal is increased or maintained (540-YES), the electronic device may perform operation 530. In a case that the voltage of the power signal received from the external electronic device increases and the current of the power signal decreases (540-NO), the electronic device may perform operation 535. In a case that the voltage of the power signal received from the external electronic device increases and the current of the power signal decreases (540-NO), the electronic device may restore the voltage requested to the external electronic device while performing operation 535.

Referring to FIG. 5, in operation 530, the electronic device according to an embodiment may classify the external electronic device into a first category for authenticating the charging device. The first category may be a preset category for classifying an external electronic device into an electronic device able to adjust a power signal according to communication (e.g., PPS communication) between the electronic device and the external electronic device. For example, the first category may be a category for classifying a normal charging device supporting a USB PD. In a state in which the external electronic device is classified into the first category, the electronic device may maintain to obtain a power signal from the external electronic device by performing at least one of operations of FIGS. 3 to 4.

Referring to FIG. 5, in operation 535, the electronic device according to an embodiment may classify the external electronic device into a second category. The second category may be a preset category for classifying an external electronic device into an electronic device that is not able to adjust a power signal according to the PPS communication. For example, the second category may be a category for classifying an abnormal charging device that does not support the USB PD. In a state that the external electronic device is classified into the second category, the electronic device may cease obtaining a power signal from the external electronic device, or may obtain a power signal having a limited voltage and/or a limited current from the external electronic device.

As described above, the electronic device according to an embodiment may authenticate the external electronic device by controlling the external electronic device based on power measured using the second data signal including the APDO. Based on authenticating the external electronic device, the electronic device may more stably obtain a power signal from the external electronic device.

Hereinafter, an example of a UI displayed by the electronic device that has performed the operations of FIGS. 1 to 5 will be described with reference to FIG. 6.

FIG. 6 illustrates an example of a user interface (UI) displayed by an electronic device (e.g., a user terminal 101-1) according to an embodiment. The electronic device 101 and/or the user terminal 101-1 of FIG. 1 may include the user terminal 101-1 of FIG. 6. The external electronic device 160 and/or the adapter 160-1 of FIG. 1 may include an adapter 160-1 of FIG. 6. An operation of the user terminal 101-1 described with reference to FIG. 6 may be performed by the electronic device 101 and/or the processor 110 of FIG. 1.

The user terminal 101-1 according to an embodiment may include a display 605 as a means for visually outputting information. The adapter 160-1 connected to a distribution system 170 may be connected with the user terminal 101-1 through a port 150. Referring to FIG. 6, based on a connector 610 (e.g., a USB Type C plug) and the port 150 (e.g., a USB Type C receptacle) extended from the adapter 160-1 being connected to each other, the user terminal 101-1 may execute a negotiation function for the adapter 160-1 and the USB PD by performing the above-described operation (e.g., operation 310 of FIG. 3) with reference to FIGS. 1 to 5. After executing the negotiation function, in response to receiving a power signal based on the negotiation function, the user terminal 101-1 may display a screen illustrated in FIG. 6 on the display 605. Hereinafter, the screen may mean a user interface (UI) displayed in at least a portion of the display. The screen may include, for example, an activity of the Android operating system.

Referring to FIG. 6, the user terminal 101-1 according to an embodiment may display a visual object associated with the power signal on the display 605 while receiving the power signal through the adapter 160-1. For example, the user terminal 101-1 may guide charging of a battery (e.g., the battery 140 of FIGS. 1 to 2) based on the power signal using a visual object such as text 620 included in a lock screen. The lock screen may be displayed to restrictively execute a preset function including an authentication function among functions supported by the user terminal 101-1 in an always on display (AOD) state and/or a lock state of the user terminal 101-1.

For example, the user terminal 101-1 may display a visual object associated with the power signal within a region provided by a system application of the user terminal 101-1, such as a notification panel 630. For example, the user terminal 101-1 may display a visual object in a form of a button 640 for guiding charging of the battery based on the power signal.

In an embodiment, using the text 620 and/or the button 640, the user terminal 101-1 may display a state of obtaining a power signal from the external electronic device based on the operation described with reference to FIGS. 1 to 5. For example, while charging the battery based on operation 435 of FIG. 4, the user terminal 101-1 may display a preset text (e.g., "low-speed charging" and/or "normal charging") on the text 620 and/or the button 650 that guides the battery to be charged at a low or normal speed. For example, while charging the battery based on operation 490 of FIG. 4, the user terminal 101-1 may display a preset text (e.g., "high-speed charging" and/or "super high-speed charging") on the text 620 and/or the button 650 that guides the battery to be charged at a high speed. For example, the user terminal 101-1 may display the text 620 including "super high-speed charging" while obtaining a power signal having power greater than 24.5 Watt (W). For example, the user terminal 101-1 may display a text 620 including "super high-speed charging 2.0" while obtaining a power signal having power greater than 43 W.

In an embodiment, the user terminal 101-1 may display a result of authenticating the external electronic device on the display 605 based on the operation of FIG. 5. For example, in a case that an abnormal external electronic device is identified based on operation 535 of FIG. 5, the user terminal 101-1 may display the text 620 and/or the button 650 with a preset text (e.g., "an unauthenticated device is connected") that guides the battery to be charged by the abnormal external electronic device.

Hereinafter, referring to FIG. 7, a charging speed of the user terminal 101-1 that measures power supported by the external electronic device using an APDO and an FPDO will be described based on an exemplary graph.

FIG. 7 illustrates an example of a graph 700 with respect to a current of a power signal received by an electronic device according to an embodiment. The electronic device 101 of FIG. 1 may include the electronic device of FIG. 7. Referring to FIG. 7, while an electronic device 101 according to an embodiment is charging a battery, the graph 700 including an input current 710 of the battery is illustrated. A horizontal axis of the graph 700 may mean time, and a vertical axis may mean a current (unit: ampere (A)). The input current 720 of the graph 700 may indicate a current inputted by another electronic device different from the electronic device 101 to the battery for charging the battery according to an embodiment. The graph 700 of FIG. 7 is exemplary, and an embodiment is not limited thereto.

Referring to an input current 710 of FIG. 7, while the battery is charged with a fixed current of 4.6 A, the electronic device 101 may maintain the current of the power signal at the fixed current based on the first charging circuitry 221 of FIG. 2. The electronic device 101 may charge the battery based on the fixed current of 4.6 A up to a moment t1. Up to before the moment t1, the electronic device 101 may identify power (e.g., multiplication of a voltage and a current included in an APDO) supported by an external electronic device (e.g., the external electronic device 160 of FIGS. 1 to 2) based on a data signal (e.g., the second data signal 340 of FIG. 3) transmitted from the external electronic device, and request a power signal having the identified power. Based on the request, the electronic device 101 may obtain a power signal having a current close to the fixed current up to the moment t1.

Referring to the input current 720 of FIG. 7, while charging the battery with the fixed current of 4.6 A, the input current 720 may gradually decrease from 4.6 A. At a moment t2 at which the fixed current is completed to charge the battery, the input current 720 may decrease by 180 mA up to 4.42 A. Since the electronic device 101 according to an embodiment more accurately measures the power provided from the external electronic device using an FPDO and/or the APDO included in the data signal of the external electronic device and communicates with the external electronic device based on the measured power, the input current 710 of the electronic device 101 may be greater than the input current 720 by a difference 730. Referring to FIG. 7, it may be seen that as the electronic device 101 receives the input current 710 maintained at 4.6 A, a length of a time period in which the battery is charged with the fixed current decreases. For example, the electronic device 101 may complete charging of the battery earlier than another electronic device.

The electronic device according to an embodiment may obtain a power signal of power and voltage of Table 3 with respect to external electronic devices that provide a maximum power and current of Table 3.

**[Table 3]**

| No. | Maximum power and current of external electronic device | Power supplied to electronic device (W) | Maximum value of voltage applied to battery (V) |
|---|---|---|---|
| 1 | 65W + 5A | 55 | 11.956 |
| 2 | 65W + 3A | 33 | 11 |
| 3 | 45W + 5A | 45 | 9.782 |
| 4 | 45W + 3A | 33 | 11 |
| 5 | 25W + 3A | 24.93 | 9.065 |

Referring to Table 3, the electronic device according to an embodiment may optimize power and/or a voltage provided from the external electronic device based on the operation described with reference to FIGS. 1 to 6. Based on the optimized power and/or voltage, the electronic device may terminate charging of the battery in a shorter time. For example, the electronic device may obtain a power signal having a fixed current set by a CC charging method based on a voltage different from the fixed voltage. Since a power signal of the voltage different from the fixed voltage is provided, the external electronic device may provide power greater than a power range that may be provided based on the fixed voltage.

As described above, the electronic device according to an embodiment may measure the power range of the external electronic device for providing the power signal based on information (e.g., the FPDO and/or the APDO) included in the data signal provided from the external electronic device. The electronic device may change power provided from the external electronic device based on the measured power range. For example, even though the external electronic device has reached a power limit, the electronic device may increase the power provided from the external electronic device based on the power range.

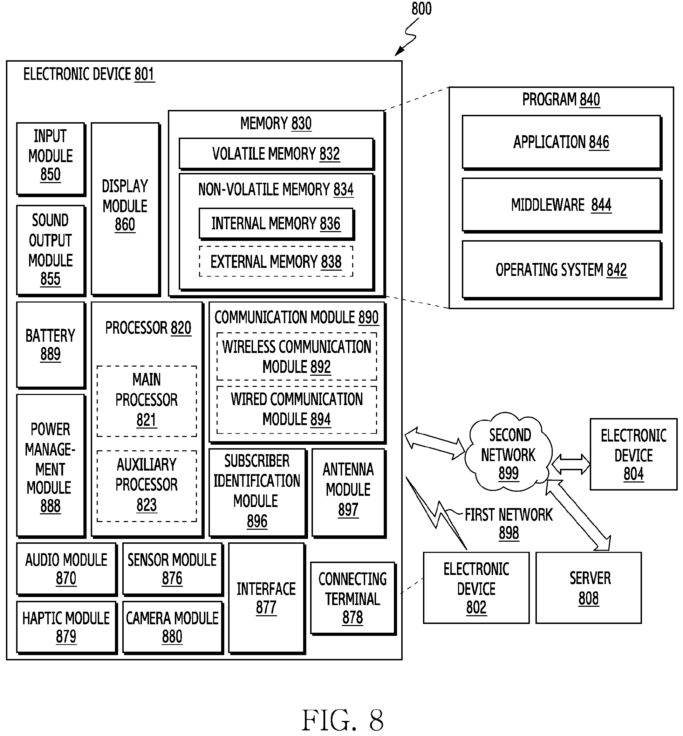

Hereinafter, one or more hardware and/or one or more programs included in the electronic device of FIGS. 1 to 7 will be described with reference to FIG. 8.

FIG. 8 is a block diagram illustrating an electronic device 801 in a network environment 800 according to various embodiments. Referring to FIG. 8, the electronic device 801 in the network environment 800 may communicate with an electronic device 802 via a first network 898 (e.g., a short-range wireless communication network), or at least one of an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module(SIM) 896, or an antenna module 897. In some embodiments, at least one of the components (e.g., the connecting terminal 878) may be omitted from the electronic device 801, or one or more other components may be added in the electronic device 801. In some embodiments, some of the components (e.g., the sensor module 876, the camera module 880, or the antenna module 897) may be implemented as a single component (e.g., the display module 860).

The processor 820 may execute, for example, software (e.g., a program 840) to control at least one other component (e.g., a hardware or software component) of the electronic device 801 coupled with the processor 820, and may perform various data processing or computation. According to an embodiment, as at least part of the data processing or computation, the processor 820 may store a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), or an auxiliary processor 823 (e.g., a graphics processing unit (GPU), a neural processing unit (NPU), an image signal processor (ISP), a sensor hub processor, or a communication processor (CP)) that is operable independently from, or in conjunction with, the main processor 821. For example, when the electronic device 801 includes the main processor 821 and the auxiliary processor 823, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823. According to an embodiment, the auxiliary processor 823 (e.g., the neural processing unit) may include a hardware structure specified for artificial intelligence model processing. An artificial intelligence model may be generated by machine learning. Such learning may be performed, e.g., by the electronic device 801 where the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820) of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. According to an embodiment, the display module 860 may include a touch sensor adapted to detect a touch, or a pressure sensor adapted to measure the intensity of force incurred by the touch.

The audio module 870 may convert a sound into an electrical signal and vice versa. According to an embodiment, the audio module 870 may obtain the sound via the input module 850, or output the sound via the sound output module 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{TM}, wireless-fidelity (Wi-Fi) direct, or infrared data association (IrDA)) or the second network 899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The wireless communication module 892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). According to an embodiment, the wireless communication module 892 may support a peak data rate (e.g., 20Gbps or more) for implementing eMBB, loss coverage (e.g., 864dB or less) for implementing mMTC, or U-plane latency (e.g., 0.5ms or less for each of downlink (DL) and uplink (UL), or a round trip of 8ms or less) for implementing URLLC.

The antenna module 897 may transmit or receive a signal or power to or from the outside (e.g., the external electronic device) of the electronic device 801. According to an embodiment, the antenna module 897 may include an antenna including a radiating element composed of a conductive material or a conductive pattern formed in or on a substrate (e.g., a printed circuit board (PCB)). According to an embodiment, the antenna module 897 may include a plurality of antennas (e.g., array antennas). In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

According to various embodiments, the antenna module 897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 or 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an internet-of-things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In an embodiment, a method of optimizing and/or maximizing power obtained from an external electronic device may be required using information (e.g., an FPDO and/or an APDO provided through a CC pin) provided based on USB PD from the external electronic device. As described above, an electronic device (e.g., the electronic device 101 of FIG. 1) according to an embodiment may comprise a port (e.g., the port 150 of FIG. 1), a battery (e.g., the battery 140 of FIG. 1), charging circuitry (e.g., the charging circuitry 120 of FIG. 1), a charging controller (e.g., the charging controller 130 of FIG. 1), and a processor (e.g., the processor 110 of FIG. 1). The processor may be configured to identify, by using the charging controller, a first data signal (e.g., the first data signal 330 of FIG. 3) received through the port. The processor may be configured to obtain, by communicating with the external electronic device (e.g., the external electronic device 160 of FIG. 1) connected to the port based on the first data signal, a power signal from the external electronic device. The processor may be configured to receive, in a state that the battery is charged by the charging circuitry receiving the power signal, a second data signal (e.g., the second data signal 340 of FIG. 3) from the external electronic device. The processor may be configured to control, based on a parameter which indicates a state of the external electronic device associated with a power limit and is included in the second data signal, the charging circuitry based on at least one of a first power indicated by the first data signal or a second power indicated by the second data signal. The electronic device according to an embodiment may maximize or optimize the power obtained from the external electronic device by controlling the charging circuitry based on the power of the external electronic device identified by a data signal provided from the external electronic device.

For example, the processor may be configured to identify the parameter for indicating the power limit of the external electronic device, which is a programmable power supply, at a preset position of a binary code included in the second data signal.

For example, the processor may be configured to obtain, from the second data signal, the binary code based on an augmented power data object (APDO) indicating a state of the external electronic device at a moment.

For example, the processor may be configured to identify the first power based on a voltage and a maximum current included in a binary code included in the first data signal.

For example, the processor may be configured to obtain, from the first data signal, the binary code based on a fixed power data object (FPDO) including capability information of the external electronic device.

For example, the processor may be configured to identify the second power based on a maximum voltage and a maximum current included in a binary code included in the second data signal.

For example, the processor may be configured to transmit, to the charging circuitry based on identifying the parameter having a preset value indicating the power limit, power which is a smaller one from among the first power or the second power.

For example, the processor may be configured to control, based on identifying a maximum voltage of the external electronic device greater than a preset voltage from the second data signal, the charging circuitry based on at least one of the first power or the second power.

For example, the processor may be configured to control, based on identifying the maximum voltage lower than the preset voltage from the second data signal, charging of the battery based on the power signal using second charging circuitry (e.g., the second charging circuitry 222 of FIG. 2) different from first charging circuitry (e.g., the first charging circuitry 221 of FIG. 2), which is charging circuitry.

For example, the first charging circuitry may include circuitry to charge the battery based on a direct current. The second charging circuitry may be configured to include circuitry to charge the battery based on a variable voltage.

For example, the processor may be configured to request increasing a current of the power signal, to the external electronic device using the charging controller based on identifying the parameter having a preset value indicating the power limit. The processor may be configured to classify, based on whether the current of the power signal is increased after the request with respect to the increasing of the current, the external electronic device to a preset category for classifying an electronic device able to adjust the power signal according to communication between the electronic device and the external electronic device.

As described above, a method of an electronic device according to an embodiment, may comprise identifying, by using a charging controller of the electronic device, a first data signal received through a port of the electronic device. The method may comprise obtaining, by communicating with an external electronic device connected to the port based on the first data signal, a power signal from the external electronic device. The method may comprise receiving, in a state that a battery of the electronic device is charged by charging circuitry of the electronic device receiving the power signal, a second data signal from the external electronic device. The method may comprise controlling, based on a parameter which indicates a state of the external electronic device associated with a power limit and is included in the second data signal, the charging circuitry based on at least one of a first power indicated by the first data signal or a second power indicated by the second data signal.

For example, the controlling may comprise identifying the parameter for indicating the power limit of the external electronic device, which is a programmable power supply, at a preset position of a binary code included in the second data signal.

For example, the identifying the parameter may comprise obtaining, from the second data signal, the binary code based on an augmented power data object (APDO) indicating a state of the external electronic device at a moment.

For example, the controlling may comprise identifying the first power based on a voltage and a maximum current included in a binary code included in the first data signal.

For example, the identifying the first power may comprise obtaining, from the first data signal, the binary code based on a fixed power data object (FPDO) including capability information of the external electronic device.

For example, the controlling may comprise identifying the second power based on a maximum voltage and a maximum current included in a binary code included in the second data signal.

For example, the controlling may comprise transmitting, to the charging circuitry based on identifying the parameter having a preset value indicating the power limit, power which is a smaller one from among the first power or the second power.

For example, the controlling may comprise controlling, based on identifying a maximum voltage of the external electronic device greater than a preset voltage from the second data signal, the charging circuitry based on at least one of the first power or the second power.

As described above, an electronic device (e.g., the electronic device 101 of FIG. 1) according to an embodiment may comprise a port (e.g., the port 150 of FIG. 1), a battery (e.g., the battery 140 of FIG. 1), charging circuitry (e.g., the charging circuitry 120 of FIG. 1), a charging controller (e.g., the charging controller 130 of FIG. 1), and a processor (e.g., the processor 110 of FIG. 1). The processor may be configured to identify a first data signal (e.g., the first data signal 330 of FIG. 3) received through the port using the charging controller. The processor may be configured to obtain, based on the first data signal, a power signal from an external electronic device (e.g., the external electronic device 160 of FIG. 1) by communicating with the external electronic device connected to the port. The processor may be configured to receive, in a state that the battery is charged by the charging circuitry receiving the power signal, a second data signal (e.g., the second data signal 340 of FIG. 3) from the external electronic device. The processor may be configured to control, in response to identifying a first preset state of the external electronic device associated with a power limit based on the second data signal, the charging circuitry using at least one of a first power indicated by the first data signal or a second power indicated by the second data signal. The processor may be configured to control the charging circuitry using the first power of the first power or the second power in response to identifying a second preset state of the external electronic device associated with the power limit based on the second data signal.

For example, the processor may be configured to identify the parameter for indicating the power limit of the external electronic device, which is a programmable power supply, at a preset position of a binary code included in the second data signal. The processor may be configured to identify a state of the external electronic device from among the first preset state or the second preset state, based on the parameter.

For example, the processor may be configured to obtain, from the second data signal, the binary code based on an augmented power data object (APDO) indicating a state of the external electronic device at a moment.

For example, the processor may be configured to obtain, from the first data signal, the binary code based on a fixed power data object (FPDO) including capability information of the external electronic device.

As described above, a method of an electronic device according to an embodiment may comprise identifying a first data signal received through a port of the electronic device using a charging controller of the electronic device. The method may comprise obtaining, based on the first data signal, a power signal from an external electronic device by communicating with the external electronic device connected to the port. The method may comprise receive, in a state that a battery of the electronic device is charged by charging circuitry of the electronic device receiving the power signal, a second data signal from the external electronic device. The method may comprise controlling, in response to identifying a first preset state of the external electronic device associated with a power limit based on the second data signal, the charging circuitry using one of a first power indicated by the first data signal or a second power indicated by the second data signal. The method may comprise controlling the charging circuitry using the first power of the first power or the second power in response to identifying a second preset state of the external electronic device associated with the power limit based on the second data signal.

For example, the receiving may comprise identifying a parameter for indicating the power limit of the external electronic device, which is a programmable power supply, at a preset position of a binary code included in the second data signal. The receiving may comprise identifying a state of the external electronic device from among the first preset state or the second preset state, based on the parameter.

For example, the receiving may comprise obtaining, from the second data signal, the binary code based on an APDO indicating a state of the external electronic device at a moment.

For example, the receiving may comprise obtaining, from the first data signal, the binary code based on an FPDO including capability information of the external electronic device.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device, comprising:
a port;
a battery;
charging circuitry;
a charging controller;
memory storing instructions; and
a processor, wherein the instructions, when executed by the processor, cause the electronic device to:
identify, by using the charging controller, a first data signal received through the port;
obtain, by communicating with an external electronic device connected to the port based on the first data signal, a power signal from the external electronic device;
receive, in a state that the battery is charged by the charging circuitry receiving the power signal, a second data signal from the external electronic device; and
control, based on a parameter which indicates a state of the external electronic device associated with a power limit and is included in the second data signal, the charging circuitry based on at least one of a first power indicated by the first data signal or a second power indicated by the second data signal.

2. The electronic device of claim 1, wherein the instructions, when executed by the processor, cause the electronic device to:
identify the parameter for indicating the power limit of the external electronic device, which is a programmable power supply, at a preset position of a binary code included in the second data signal.

3. The electronic device of claim 1, wherein the instructions, when executed by the processor, cause the electronic device to:
obtain, from the second data signal, the binary code based on an augmented power data object (APDO) indicating a state of the external electronic device at a moment.

4. The electronic device of claim 1, wherein the instructions, when executed by the processor, cause the electronic device to:
identify the first power based on a voltage and a maximum current included in a binary code included in the first data signal.

5. The electronic device of claim 4, wherein the instructions, when executed by the processor, cause the electronic device to:
obtain, from the first data signal, the binary code based on a fixed power data object (FPDO) including capability information of the external electronic device.

6. The electronic device of claim 1, wherein the instructions, when executed by the processor, cause the electronic device to:
identify the second power based on a maximum voltage and a maximum current included in a binary code included in the second data signal.

7. The electronic device of claim 1, wherein the instructions, when executed by the processor, cause the electronic device to:
transmit, to the charging circuitry based on identifying the parameter having a preset value indicating the power limit, power, which is a smaller one from among the first power or the second power.

8. The electronic device of claim 1, wherein the instructions, when executed by the processor, cause the electronic device to:
control, based on identifying a maximum voltage of the external electronic device greater than a preset voltage from the second data signal, the charging circuitry based on at least one of the first power or the second power.

9. The electronic device of claim 1, wherein the instructions, when executed by the processor, cause the electronic device to:
control, based on identifying the maximum voltage lower than the preset voltage from the second data signal, charging of the battery based on the power signal using second charging circuitry different from first charging circuitry, which is the charging circuitry.

10. The electronic device of claim 9,
wherein the first charging circuitry includes circuitry to charge the battery based on a direct current, and
wherein the second charging circuitry includes circuitry to charge the battery based on a variable voltage.

11. The electronic device of claim 1, wherein the instructions, when executed by the processor, cause the electronic device to:
request increasing a current of the power signal, to the external electronic device using the charging controller based on identifying the parameter having a preset value indicating the power limit; and
classify, based on whether the current of the power signal is increased after the request with respect to the increasing of the current, the external electronic device to a preset category for classifying an electronic device able to adjust the power signal according to communication between the electronic device and the external electronic device.

12. A method of an electronic device, comprising:
identifying, by using a charging controller of the electronic device, a first data signal received through a port of the electronic device;
obtaining, by communicating with an external electronic device connected to the port based on the first data signal, a power signal from the external electronic device;
receiving, in a state that a battery of the electronic device is charged by charging circuitry of the electronic device receiving the power signal, a second data signal from the external electronic device; and
controlling, based on a parameter, which indicates a state of the external electronic device associated with a power limit and is included in the second data signal, the charging circuitry based on at least one of a first power indicated by the first data signal or a second power indicated by the second data signal.

13. The method of claim 12, wherein the controlling comprises:
identifying the parameter for indicating the power limit of the external electronic device which is a programmable power supply, at a preset position of a binary code included in the second data signal.

14. The method of claim 13, wherein the identifying the parameter comprises:
obtaining, from the second data signal, the binary code based on an augmented power data object (APDO) indicating a state of the external electronic device at a moment.

15. The method of claim 12, wherein the controlling comprises:
identifying the first power based on a voltage and a maximum current included in a binary code included in the first data signal.
